# EUROPEAN PATENT APPLICATION

(11) **EP 4 250 221 A1**
(43) Date of publication of application: **27.09.2023**
(21) Application number: 21911551.6
(22) Date of filing: 22.12.2021
(51) Int. Cl.: G06Q 50/30, B60L 53/66, B60L 53/30, H04L 9/32

(54) **METHOD AND DEVICE FOR PROVIDING INFORMATION ABOUT PNC-RELATED SERVICE PROVIDER**

(30) Priority: 22.12.2020 US 202063129050 P; 22.01.2021 US 202163140316 P
(71) Applicant: HYUNDAI MOTOR COMPANY, Seoul 06797 (KR); Kia Corporation, Seocho-gu Seoul 06797 (KR); Myongji University Industry and Academia Cooperation Foundation, Gyeonggi-do 17058 (KR)
(72) Inventor: SHIN, Min Ho, Yongin-si, Gyeonggi-do 17058 (KR)
(74) Representative: Isarpatent
(86) International application number: PCT/KR2021/019655
(87) International publication number: WO 2022/139485

(57) **Abstract**

Disclosed are a method and device for providing information about a mobility solution provider or a mobility service provider supporting PnC. This method comprises the steps of: receiving an authorization setup request message for PnC from an electric vehicle communication controller (EVCC) installed in an EV; generating a list of service providers supporting PnC of supply equipment associated with the EV according to the authorization setup request message; transmitting, to the EVCC, an authorization setup response message including the list of service providers; receiving, from the EVCC, an authorization request message including a contract certificate issued by a first service provider selected from the list of service providers; and transmitting, to the EVCC, an authorization response message for notifying the completion of the authorization of the PnC supported by the first service provider on the basis of the contract certificate.

## Description

### [Technical Field]

The present disclosure relates to a method for providing service provider information, and more particularly to, a method and an apparatus for providing information on mobility operators or mobility service providers supporting plug and charge/park and charge (PnC) services.

### [Background Art]

The electric vehicle (EV) is powered by a motor with battery power and offers advantages such as reduced air pollutants, such as exhaust gases and noises, fewer breakdowns, longer lifespan, and simplified operations compared to conventional gasoline engine vehicles.

The EVs may be classified into hybrid electric vehicles (HEVs), plug-in hybrid electric vehicles (PHEVs), and electric vehicles (EVs) based on their power sources or propulsion systems. The HEV has an engine for main power and a motor for auxiliary power, while the PHEV has a motor for main power and an engine that is used when a battery is discharged. The EV, on the other hand, is powered solely by a motor and does not have an engine.

The EV charging system may be basically defined as a system that charges a battery mounted in an EV using power from a commercial power grid or an energy storage device. The EV charging system may have various forms depending on the type of EV. For example, the EV charging system may operate as a conductive charging system including the EV and an EV supply equipment (EVSE) and using a cable or a non-contact wireless power transfer (WPT) system. The EVSE may be simply referred as 'supply equipment (SE)'.

A certain EVSE may start charging after going through a predetermined authorization process for the EV, and such the authorization process differs depending on a charging infrastructure (briefly 'infrastructure') and functions of the EV. The two representative authorization schemes for EV charging may include a plug and charge/park and charge (PnC) scheme in which authorization and payment are automatically completed using a contract certificate stored in the EV, and a scheme in which identification, authorization, and payment are performed using an external identification means (EIM) such as a credit or debit card, cash, smartphone, web application, NFC, RFID, phone call, etc. of a user of the EV.

That is, the PnC scheme is a kind of automatic authorization scheme that authorizes an EV charging user using a certificate without requiring any interaction from the user.

Such the PnC scheme is typically classified into a wired charging scheme and a wireless charging scheme. The wired charging scheme refers to a plug and charge scheme in which service authorization and charging are performed by simply inserting a plug between the EV and a charging station, and the wireless charging scheme refers to a PnC scheme in which service authorization and charging are performed by simply parking the EV on a charging spot of a charging station. When using the PnC scheme, all processes such as EV user authentication, charging, and billing are automatically processed in charging the EV.

Meanwhile, an owner of the EV may conclude a PnC-related service use contract with a charging point operator (CPO), mobility operator (MO), or mobility service provider (eMSP), install a contract certificate in the EV at the time of initial charging, and then receive a PnC service at a charging station associated with the corresponding CPO, MO or eMSP.

According to the existing technique, in order to receive a PnC service, the EV should transmit a contract certificate for authorization to a supply equipment (SE). In this case, the EV may hold several contract certificates of different MOs. During the authorization, the EV may not have information on a CPO, MO or eMSP supported by the corresponding charging station. Accordingly, if the EV transmits a contract certificate issued by a CPO, MO, or eMSP that is not supported by a charger, the EV should terminate a session and restart a session with another contract certificate.

As described above, in order to make the PnC authorization step efficient and reliable, a method for the EV to know in advance a MO that the SE or a charger of the SE can authorize is required.

In addition, in the case of PnC, the EV may hold multiple contract certificates. In this case, the EV should select one contract certificate among the multiple contract certificates and transmit it to the SE when transmitting an authorization request message for PnC. If the CPO, MO, or eMSP does not support the SE, which is a provider of the contract certificate, the EV should select another contract certificate and repeatedly attempt PnC authorization. That is, the EV should repeat the authorization request process until it selects a contract certificate issued by the corresponding CPO, MO or eMSP, or until it transmits all contract certificates owned by it. Such the trial-and-error problem is very inefficient in PnC authorization.

### [Disclosure]

### [Technical Problem]

The present disclosure has been derived to solve the problems of the prior arts according to the above-described needs of the prior arts, and an objective of the present disclosure is to provide a method and an apparatus for providing PnC-related service provider information, which are used for a supply equipment communication controller (SECC) to provide an EV communication controller (EVCC) with information on mobility operators or mobility service providers (e.g., emobility Service Provider (eMSP)) supporting PnC services.

Another objective of the present disclosure is to provide a method and an apparatus for providing PnC-related service provider information, which can improve reliability and stability for a PnC procedure by improving the PnC procedure.

### [Technical Solution]

A method for PnC-related service provider information, according to an aspect of the present disclosure for resolving the above-described technical problem, which is performed by a supply equipment communication controller (SECC) of a supply equipment (SE) supplying electric power to an electric vehicle (EV), may comprise: receiving an authorization setup request message for PnC from an EV communication controller (EVCC) installed in the EV; generating a service provider list of service providers supporting PnC for the SE associated with the EV according to the authorization setup request message; transmitting an authorization setup response message including the service provider list to the EVCC; receiving, from the EVCC, an authorization request message including service provider information and a contract certificate corresponding to a first service provider selected from the service provider list; and transmitting an authorization response message indicating completion of authorization of a PnC supported by the first service provider to the EVCC based on the service provider information and the contract certificate.

The authorization setup response message may include a PnC authorization setup response identification mode (PnCASResIdentificationMode) parameter with elements of a supported service provider list and a generation challenge (GenChallenge).

The supported service provider list may be a list of service providers that support PnC of the SE associated with the EV, and may include information or identifiers of mobility operators in a contractual relationship supporting PnC for battery charging of the EV.

The supported service provider list (SupportedProviderList) may be a list of service providers that support PnC of the SE associated with the EV, and may include a roaming platform for mobility operators in a contractual relationship supporting PnC for battery charging of the EV.

The authorization setup response message may further include a response code parameter set to `OK' and an authorization service parameter set to 'PnC'.

The authorization setup response message may further include a certificate installation service parameter set to 'true' or 'false'.

The method may further comprise: allowing the EVCC to select one mobility operator (MO) from the service provider list based on the service provider list included in the authorization setup response message.

The method may further comprise: allowing the EVCC to generate an authorization request message including service provider information for a first MO selected from the service provider list and a contract certificate issued by the first MO.

The method may further comprise: based on the service provider list included in the authorization setup response message, allowing the EVCC to release a state associated with the SE; or allowing the EVCC to output a signal for the EV to leave a parking area of the SE.

The method may further comprise: allowing the EVCC to select a roaming platform or roaming service included in the service provider list based on the service provider list; and allowing the EVCC to generate an authorization request message including service provider information set to the roaming platform or roaming service and a contract certificate issued by the roaming platform or a roaming platform providing the roaming service.

The authorization request message may include a selected authorization service parameter set to `PnC', and may include a generation challenge element and a contract certificate chain element within a PnC request identification mode or PnC request authorization mode parameter, and the contract certificate chain element is set to the roaming platform.

A method for providing PnC-related service provider information, according to another aspect of the present disclosure for resolving the above-described technical problem, which is performed by an electric vehicle communication controller (EVCC) of an electric vehicle (EV), may comprise: transmitting an authorization setup request message for PnC to a supply equipment communication controller (SECC) of a supply equipment (SE) that supplies electric power to the EV; receiving, from the SECC, an authorization setup response message including a service provider list of service providers supporting PnC for the SE associated with the EV; transmitting, to the SECC, an authorization request message including service provider information and a contract certificate corresponding to a first service provider selected from the service provider list; and receiving, from the SECC, an authorization response message indicating completion of authorization of a PnC supported by the first service provider.

The authorization setup response message may include a PnC authorization setup response identification mode (PnCASResIdentificationMode) parameter with elements of a supported service provider list and a generation challenge (GenChallenge).

The supported service provider list may be a list of service providers that support PnC of the SE associated with the EV, and may include information or identifiers of mobility operators in a contractual relationship supporting PnC for battery charging of the EV.

The supported service provider list (SupportedProviderList) may be a list of service providers that support PnC of the SE associated with the EV, and may include a roaming platform by one of mobility operators in a contractual relationship supporting PnC for battery charging of the EV.

The authorization setup response message may further include a response code parameter set to `OK' and an authorization service parameter set to 'PnC'.

The authorization setup response message may further include a certificate installation service parameter set to 'true' or 'false'.

The method may further comprise: selecting one mobility operator (MO) from the service provider list based on the service provider list included in the authorization setup response message.

The method may further comprise: generating an authorization request message including service provider information for a first MO selected from the service provider list and a contract certificate issued by the first MO.

The method may further comprise: based on the service provider list included in the authorization setup response message, releasing a state associated with the SE; or outputting a signal for the EV to leave a parking area of the SE.

The method may further comprise: selecting a roaming platform or roaming service included in the service provider list based on the service provider list; and generating an authorization request message including service provider information set to the roaming platform or roaming service and a contract certificate issued by the roaming platform or a roaming platform providing the roaming service.

An apparatus for providing PnC-related service provider information, according to yet another aspect of the present disclosure for resolving the above-described technical problem, as a PnC-related service provider information provision apparatus including a supply equipment communication controller (SECC) of a supply equipment (SE) supplying electric power to an electric vehicle (EV), may comprise a processor and a memory storing instructions executable by the processor. When executed by the processor, the instructions are configured to perform: receiving an authorization setup request message for PnC from an EV communication controller (EVCC) installed in the EV; generating a service provider list of service providers supporting PnC for the SE associated with the EV according to the authorization setup request message; transmitting an authorization setup response message including the service provider list to the EVCC; receiving, from the EVCC, an authorization request message including service provider information and a contract certificate corresponding to a first service provider selected from the service provider list; and transmitting an authorization response message indicating completion of authorization of a PnC supported by the first service provider to the EVCC based on the service provider information and the contract certificate.

An apparatus for providing PnC-related service provider information, according to yet another aspect of the present disclosure for resolving the above-described technical problem, as a PnC-related service provider information provision apparatus including an electric vehicle communication controller (EVCC) of an electric vehicle (EV), may comprise a processor and a memory storing instructions executable by the processor. When executed by the processor, the instructions are configured to perform: transmitting an authorization setup request message for PnC to a supply equipment communication controller (SECC) of a supply equipment (SE) that supplies electric power to the EV; receiving, from the SECC, an authorization setup response message including a service provider list of service providers supporting PnC for the SE associated with the EV; transmitting, to the SECC, an authorization request message including service provider information and a contract certificate corresponding to a first service provider selected from the service provider list; and receiving, from the SECC, an authorization response message indicating completion of authorization of a PnC supported by the first service provider.

### [Advantageous Effects]

According to the present disclosure, the SECC can provide the EVCC with information on MOs or eMSPs supporting PnC services of the charging station, such that the EV can know in advance an MO that can be authorized by a charger and deliver a contract certificate supported by the MO to the charger. Accordingly, authorization in the PnC procedure can be correctly and quickly processed.

In addition, according to the present disclosure, when the EV has a plurality of contract certificates, the EV can receive, from the SE, information on a service provider who can support the charging station or charger at the beginning of the PnC procedure. Accordingly, when the EV selects a contract certificate to be transmitted through an authorization request message for PnC, the EV can correctly select the contract certificate with the CPO, MO, or eMSP that supports the SE, and provide the selected contract certificate to the SECC, thereby eliminating trial-and-error problems in advance.

In addition, according to the present disclosure, reliability and stability of the PnC procedure can be improved by improving the PnC procedure for EV charging.

### [Description of Drawings]

FIG. 1 is a conceptual diagram illustrating an overall configuration of a PnC-related service provider information provision system according to an exemplary embodiment of the present disclosure.
FIG. 2 is an exemplary diagram illustrating a PnC architecture to which a PnC-related service provider information provision method according to an exemplary embodiment of the present disclosure is applicable.
FIG. 3 is an exemplary diagram for describing a PKI usable in the PnC architecture of FIG. 2.
FIG. 4 is a block diagram illustrating a message sequencing for V2G communication states to describe a PnC-related service provider information provision method according to an exemplary embodiment of the present disclosure.
FIG. 5 is an exemplary diagram for describing a certificate installation method that can be combined with a PnC-related service provider information provision method according to an exemplary embodiment of the present disclosure.
FIG. 6 is a diagram for describing main procedures of a PnC-related service provider information provision method according to an exemplary embodiment of the present disclosure.
FIGS. 7A and 7B are schema diagrams of some configurations of an authorization setup response message that can be employed in the PnC-related service provider information provision method of FIG. 6.
FIG. 8 is a diagram for describing main procedures of a PnC-related service provider information provision method according to another exemplary embodiment of the present disclosure.
FIG. 9 is a schematic block diagram for a PnC-related service provider information provision apparatus according to another exemplary embodiment of the present disclosure.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Additional terms used in the present disclosure are defined as follows.

"Electric vehicle (EV)" may refer to an automobile defined in 49 code of federal regulations (CFR) 523.3 or the like. The EV may be used on highways and driven by electricity supplied from a vehicle-mounted energy storage device such as a battery rechargeable from a power source outside the vehicle. The power supply source may include a residence, a public electric service, or a generator using vehicle-mounted fuel. The EV may be referred to as an electric car, an electric automobile, an electric road vehicle (ERV), a plug-in vehicle (PV), a plug-in vehicle (xEV), or the like, the xEV may be referred to as or classified into a plug-in all-electric vehicle or battery electric vehicle (BEV), a plug-in electric vehicle (PEV), a hybrid electric vehicle (HEV), a hybrid plug-in electric vehicle (HPEV), a plug-in hybrid electric vehicle (PHEV), or the like.

"Plug-in Electric Vehicle (PEV)" may refer to an EV that recharges the on-vehicle primary battery by connecting to the power grid.

"Wireless power charging system (WCS)" may refer to a system for wireless power transfer, alignment, and communication between a ground assembly (GA) and a vehicle assembly (VA).

"Wireless power transfer (WPT)" may refer to a technology that transfers or receives electric power to and from an EV through non-contact means such as electromagnetic induction and resonance from a power source such as utility, grid, energy storage device, and fuel cell generator.

"Utility": A set of systems which supply electrical energy and may include a customer information system (CIS), an advanced metering infrastructure (AMI), rates and revenue system, etc. The utility may provide the EV with energy based on a rates table and discrete events. Additionally, the utility may provide information about certification of EVs, interval of power consumption measurements, and a tariff.

"Smart charging": A system in which EVSE and/or PEV communicate with power grid to optimize charging ratio or discharging ratio of EV by reflecting capacity of the power grid or expense of use.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupling": Magnetic coupling between two coils. In the present disclosure, coupling between the GA Coil and the VA Coil.

"Original equipment manufacturer (OEM)": An EV manufacturer or a server operated by the EV manufacturer. It may include a root certification authority (CA) or a root certification server that issues an OEM root certificate.

"Power grid operator (V2G operator)": A primary actor participating in V2G communication using a transmission protocol, or an entity for initiation of a blockchain for automatic authentication of an EV or EV user and creation of a smart contract on the blockchain. It may include at least one trusted certification authority or trusted certification server.

"Mobility operator (MO)": One of entities within a PnC architecture that have a contractual relationship with an EV owner regarding charging, approval, and payment to enable an EV driver to charge an EV battery at a charging station. It may include at least one certification authority or certification server that issues and manages its own certificate.

"Charge service provider (CSP)": An entity responsible for managing and authenticating a credential of an EV user, and performing a role of providing billing and other value-added services to customers. It may correspond to a special type of MO, and may be implemented in a combined form with MO.

"charging station (CS)": A facility or device that has one or more EV supply equipment and actually performs charging of an EV.

"Charging station operator (CSO)": An entity that is connected to a power grid and manages power in order to supply power requested by an EV. The CSO may be a term of the same concept as a charge point operator (CPO) or an e-mobility service provider (eMSP), or it may be a term of a concept included in the CPO or eMSP or including the CPO or eMSP. The CSO, CPO or eMSP may include at least one certification authority that issues or manages its own certificate.

"e-mobility authentication identifier (eMAID)": A unique identifier that links a contract certificate to a payment account of an owner of an electromobility that uses electricity. In exemplary embodiments, the mobility authentication identifier may include an identifier of an EV certificate or an identifier of a provisioning certificate. The term eMAID may be replaced to refer to `e-mobility account identifier' or may be replaced with a contract ID.

"Clearing house (CH)": An entity that handles cooperation matters between MOs, CSPs, and CSOs. It can act as an intermediary that facilitates approval, billing, and adjustment procedures for EV charging service roaming between two parties.

"Roaming": Information exchanges and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

Hereinafter, exemplary embodiments of the present disclosure will be explained in detail by referring to accompanying figures.

Methods for providing information of mobility operators or mobility service providers supporting PnC services, which will be described in the present exemplary embodiments, are characterized in that an SECC provides an EVCC with information on service providers such as CPO, MO, and eMSP that support PnC services.

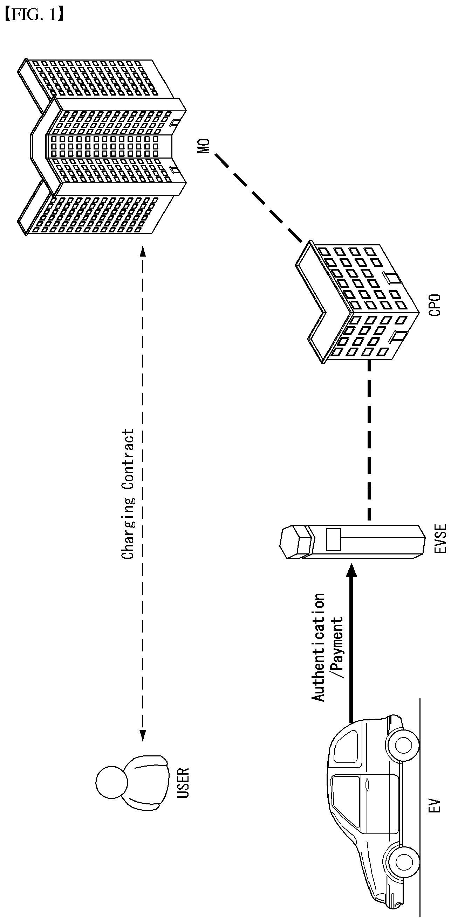

FIG. 1 is a conceptual diagram illustrating an overall configuration of a PnC-related service provider information provision system according to an exemplary embodiment of the present disclosure.

As shown in FIG. 1, an SECC of a charging station that interworks with at least one of an MO and a CPO may be a type of PnC-related service provider information provision apparatus, and may perform a PnC authorization procedure for an EV in a state in which an EVCC intending to charging a battery has established a communication channel with a specific EVSE.

For the PnC authorization, a user of the EV (i.e., EV user) may first conclude a charging contract with a provisioning certificate identification (PCID) to join the MO, and then use contract data generated when joining the MO to transfer a contract certificate to a service provider of a certificate provisioning service (CPS).

The PCID may be an authentication identifier of an EV certificate. Further, the contract data or contract-related information may include an account identifier corresponding to the PCID, and a valid period and an active state of the account identifier. The account identifier may be an identifier of the EV user, and the active state may have a value corresponding to 'true' when the account identifier is valid and a value corresponding to 'false' otherwise.

In addition, the SECC controlling the EVSE may receive a message requesting payment details related to payment of EV charging from the EVCC, and transmit a response message corresponding to the request message to the EVCC. The response message may include information on the payment details.

In addition, the SECC may receive an authorization request message related to authentication of the EV user from the EVCC, transmit the authorization request message to the CPO, CPS, and/or the like to obtain a check result of authorization and revocation associated with a valid account identifier corresponding to the authentication identifier, and transmit a response message regarding PnC authorization to the EVCC based on the check result.

In the case of conductive power transfer, the above-described EVSE may include conductors for respective phases, neutral and protective ground conductors, EV coupler to which a plug is attached, and the like, may include other accessories, devices, power outlets or devices installed to transfer energy to the EV through wiring, and may be installed to enable communication therebetween. In the case of WPT, the above-described EVSE may include an SECC and off-board equipments including one or more supply equipments operating under the control of the SECC. In the following description, the above-described EVSE may also be referred to as a supply equipment (SE) for short.

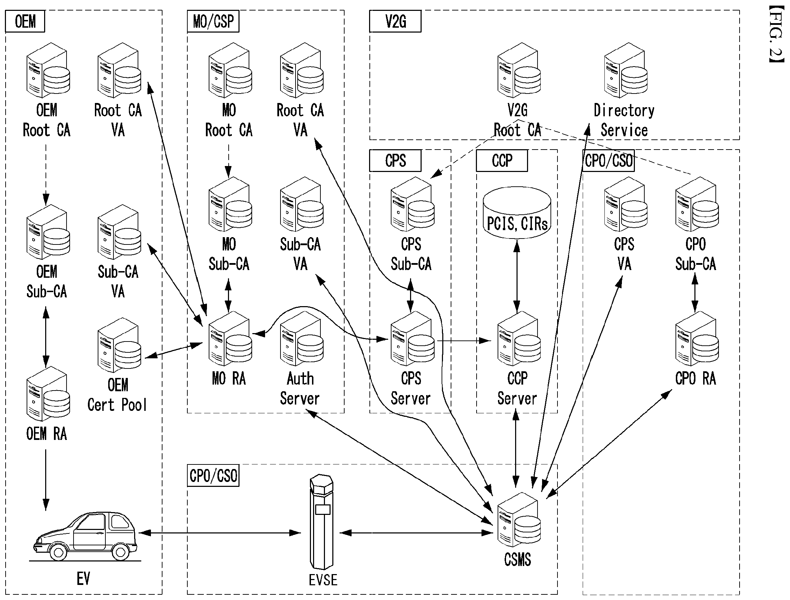

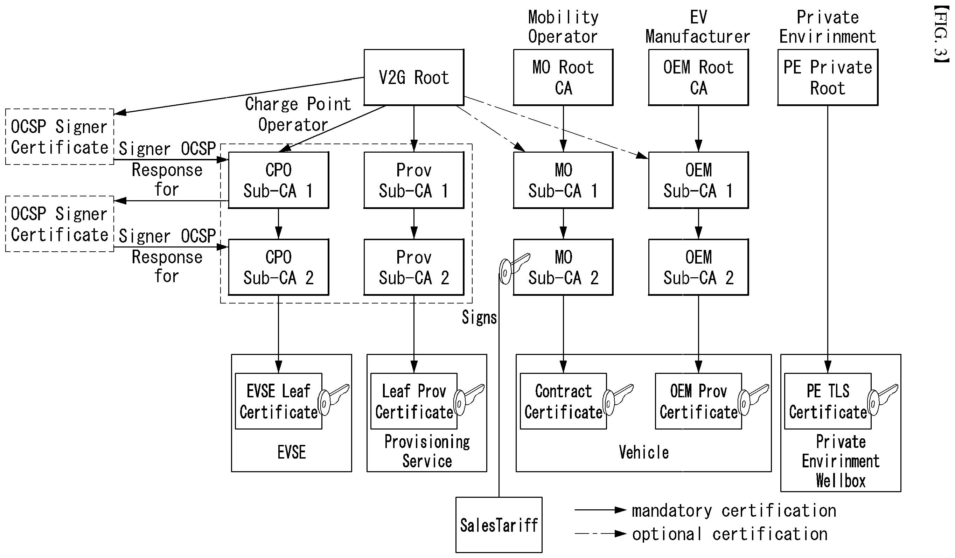

Meanwhile, an authentication procedure for EV charging will be described with reference to FIG. 2 and parts of FIG. 3 as follows.

First, when an EV desires to charge a vehicle battery at an EV charging station by autonomous driving or according to a driver's input signal, the EV may use a manual scheme of using an external identification means (EIM) such as the EV user's credit card, cash, membership card, or the like or transmit a first message to the SECC of the EVSE (hereinafter referred to simply as a 'charger') in order to use an automatic authorization and payment scheme (i.e., plug and charge/park and charge (PnC)).

The first message may include an authorization setup request message. The authorization setup request message may be an empty message.

The EVCC that has transmitted the authorization setup request message may receive, from the SECC, an authorization setup response message including a service provider list for at least one or more service providers supporting PnC services of an SE associated with the EV.

Then, the EVCC may transmit, to the SECC, a second message or an authorization request message including information or an identifier of one mobility operator selected from the service provider list and a contract certificate issued by the selected mobility operator.

When an eMAID and the contract certificate are transmitted to the charger through the second message, the SECC may transmit a response message including an authorization or revocation confirmation result for PnC to the EVCC based on the corresponding information.

Then, the EVCC may transmit a message including a parameter for payment service selection (PaymentServiceSelection) to the SECC, or may transmit a payment detail request message (PaymentdetailsReq) requesting information on payment details to the SECC.

More specifically, the contract certificate may be a certificate issued for the EVCC by a subordinate certification authority (Sub-CA) of the mobility service provider (eMSP), may be provided to the EV through the SECC and/or a secondary actor (SA), and may be used for an extensible markup language (XML) signature on an application layer to verify signatures generated by the EVCC.

The secondary actor may use the eMAID, which is part of a main field of the contract certificate, to authorize the EV to charge through the certificate provisioning service (CPS) based on the mobility contract linked to the charging service provider. The SA may include the CPO and the MO, or may further include a value-added network operator providing a value-added network. The SECC may transmit, to the EVCC of the EV, a payment detail response message (paymentdetailsRes) responding to the payment detail request message according to a confirmation result of the SA.

When there is no problem with the signature generated by the EVCC, the SA or SECC may transmit a challenge text regarding charging attempt permission to the EVCC through a predetermined message. The EVCC may sign the challenge text and transmit a message including the signed challenge text to the EVSE to proceed with authorization of the charging process. This message may include an authorization request (AuthorizationReq) message requesting authorization or approval for the charging. The SECC controlling the EVSE associated with the EV may receive the authorization request message, and verify the signature of the EV, which is included in the authorization request message, to authenticate the user.

Through the above-described PnC procedure, the EVCC may prepare for the charging process, be connected to a charging device such as the EVSE of the charging station (CS) through a wired link or wireless link, receive electric energy under the charging authorization, and charge the vehicle battery.

The above-described PnC procedure may be performed through a secure session. In this case, since the messages should be transmitted and received based on certificates of the respective entities, a backend system for issuing, managing, and updating the certificates of the respective entities may be required.

FIG. 2 is an exemplary diagram illustrating a PnC architecture to which a PnC-related service provider information provision method according to an exemplary embodiment of the present disclosure is applicable.

As shown in FIG. 2, the PnC architecture is for an EV charging service, and may include PnC architecture constituent systems such as an OEM, MO or CSP, CPO or CSO, and a V2G operator, and may include a CPS and a contract certificate pool (CCP) provided by them.

The EV refers to an EV owned by an EV user, and it is possible to charge a battery mounted in the EV at a charging station or supply power from the battery to a grid in a wired or wireless manner. An OEM provisioning certificate may be installed in the EV during manufacturing. When a vehicle purchase contract and a contract with the MO are concluded, a contract certificate may be installed in the EV. In addition, a V2G root certificate of the V2G operator may be installed in the EV.

The OEM may include a root certification authority (Root CA) that issues an OEM root certificate, and operate and maintain its subordinate certification authority (OEM Sub-CA). When the EV is manufactured, the OEM may use an OEM intermediate chain certificate (i.e., OEM Sub-CA cert.) to generate the OEM provisioning certificate, and install the OEM provisioning certificate in the EV through an OEM registration authority (RA).

The root CA, sub-CA, and OEM certificate pool (i.e., Cert. Pool) of the OEM may be connected with the RA of the MO (i.e., MO RA), prove the identity of the MO RA or its server, and issue a certificate therefor.

The MO or CSP is an entity that has a contractual relationship with the EV user for charging, authorization, and payment so that the EV user can charge the EV battery at a charging station. In order for the EV to receive a charging service from the current charging station, the current charging station should belong to a pre-registered MO or support a roaming scenario.

The MO may include an MO root CA, which issues an MO root certificate, and operate and maintain its subordinate certification authority (i.e., MO Sub-CA). An MO certificate chain, which is composed of the MO root certificate and MO intermediate chain certificates issued by its subordinate certification authorities, is used when generating the contract certificate. In addition, the MO certificate chain may be also used to verify the contract certificate installed in the EV in a non-roaming or roaming environment.

The authentication servers of the root CA and the subordinate CAs of the MO may be connected with a charging station management system (CSMS) of the CPO or CSO, may verify an identity of the CSMS, and may issue a certificate according to a verification result.

In addition, the CSP may authenticate the EV user, manage certificate issuance (credential), and provide a billing and other value-added network-related service to the EV user. The CSP may be considered to correspond to a special type of MO, and may be implemented in a form combined with the MO.

A plurality of CSPs may exist, each CSP may be associated with one or more CSOs, and the CSP and one or more CSOs may constitute one charging network. The EV may receive a charging service in the PnC scheme from a CSP or CSO associated with an MO having a contractual relationship. When desiring to use a charging service through another CSO without a contractual relationship with EV or not associated with an MO having a contractual relationship with the EV, roaming is required. Each CSP may exchange information with other CSPs or CSOs in other networks for roaming, and may also exchange information with a clearing house (CH).

The CPS may provide an encryption key used for transmission and reception of certificates to an EV client or MO RA through a CPS server together with a contract certification chain in the process of installing or updating the contract certificate in the EV. The CPS server may operate and maintain a CPS subordinate certification authority (Sub-CA), and may be connected to the root CA of the V2G operator through the CPS Sub-CA.

The CPS may be equipped with a leaf provisioning certificate and a provisioning intermediate chain certificate (i.e., Prov Sub-CA cert.). When the contract certificate is installed or updated in the EV, the CPS may provide a provisioning service that shares each MO's public key, Diffie-Hellman (DH) public key, and eMAID along with the contract certificate chain, so that the EV can use them to verify the contract certificate chain and verify the integrity and authenticity of the contract certificate.

The CCP may temporarily store a response message for installation or update during the process of installing or updating the contract certificate in the EV. Given that an installation and update timeout is very short and strict, the response message may be stored in the CCP in advance and maintained until the installation or update is completely completed. Since there may be several EVs where the contract certificates are installed or updated, the response message may be maintained in a form of a directory after a reference number is added.

The CCP may include a CCP server connected to the CSMS, and manage and maintain a data base which is managed by a CCP server and stores the contract certificates, PCIDs, certificate identification registrations (CIRs), and the like.

The V2G operator acts as a root CA in relation to a public key infrastructure (PKI) in the PnC architecture. Accordingly, the V2G root CA serves as a root trust anchor, and all entities or actors shown in FIG. 3 regard the V2G root CA as a trusted server. The V2G root CA may be connected to a CPS Sub-CA and connected to a CPO Sub-CA. The V2G operator may provide a directory service to the CSMS.

The CSO or CPO may operate the charging station and manage power to provide a requested charging service. For example, the CSO may be operated by a charging station manufacturer, EVSE manufacturer, or electricity supplier.

Regarding the PKI, the CSO or CPO may operate CPO Sub-CAs required to generate an SECC leaf certificate for each charging station. The CPO Sub-CA may be connected to the CSMS through a CPO RA and process registration and certification of the CSMS.

The charging station (CS) refers to a place where charging on the EV is performed or includes a charging facility installed there. The CS may have at least one conductive charger and/or wireless charging spot. One or more charging stations may be installed in a commercial specialty charging facility. In addition, the charging station may be located in various places, such as a parking lot attached to the EV user's house, a parking area for EV charging at a gas station, a parking area at a shopping center or a workplace, and the like. The charging station may be referred to as a `charging point', 'EV charging station', 'EV point', or the like.

A clearing house (CH) may process cooperation matters between MOs and CSPs. The CH may act as an intermediary that facilitates the authorization, billing, and settlement procedures for EV charging service roaming between the two settlement or settlement parties. When the EV user wants to charge the EV at a charging station that does not belong to a network of the MO with which the EV has a contractual relationship, the CH may support a roaming service by being connected to a CSO or CSP.

In a situation where roaming is required. The CH may enable the CSO or CSP to contract with the MO and pass authorization and charging details record (CDR) to the MO. The CH may be referred to as `contract clearing house (CCH)', `mobility clearing house (MCH)', `roaming platform', `e-mobility clearing house (e-MOCH)', or the like.

Although the above-described CSO, CPS, MO, CCH, and V2G operator can be seen as referring to persons or organizations of persons, throughout the present disclosure and the claims, they may refer to means or components implemented in hardware, software, and/or combinations thereof, and may be functionally given names shortened for readability.

In addition, each of the above-described components may be a server apparatus implemented as hardware, software, or a combination thereof and allowing access of other devices through a network such as the Internet. Since these components are functionally separated, two or more of them may be mounted and executed in one physical device, and may be integrated into one program. In particular, a single entity may serve as both the CSO and the CSP, and another single entity may serve as both the CPS and the CCP. One or more of the above-described components may be rearranged to have different appearances and names.

In addition, the CSO has something in common with the CPO in terms of roles and functions, and although they have differences in some functions and nuances, they actually refer to the same entity. In addition, the CSP has something in common with the MO in terms of roles and functions, and the CSP and the MO may be terms that can be used interchangeably.

FIG. 3 is an exemplary diagram for describing a PKI usable in the PnC architecture of FIG. 2.

As shown in FIG. 3, the PKI required to operate PnC may provide a framework for verifying identity of a person or device, enabling confidential communication, and ensuring controlled access to resources.

Specifically, an EV manufacturer, as the OEM for the EV, may act as an OEM root CA that issues an OEM root CA certificate, and operate an OEM Sub-CA 1 and an OEM Sub-CA 2. The EV manufacturer (hereinafter referred to as 'OEM') generates an OEM root certificate (OEM Root CA cert.), and generate the OEM intermediate chain certificates (OEM Sub-CA 1 cert., OEM Sub-CA 2 cert.) by signing them with its own private key.

During manufacturing of the EV, a secondary subordinate certification authority (i.e., OEM Sub-CA 2), which is the last certification authority in the OEM's intermediate chain, may use a private key paired with a public key included in the OEM secondary intermediate chain certificate (OEM Sub-CA 2 cert.) to generate an OEM provisioning certificate (i.e., OEM Prov cert.), and install it in the EV. The OEM provisioning certificate (OEM Prov cert.) may be used to verify a signature of the request message during the certificate installation request process for the EV, uniquely identifying the EV throughout the life of the EV.

The MO may function as a root certification authority (i.e., MO Root CA) that issues an MO root CA certificate (i.e., MO Root CA cert.). The MO may generate a primary intermediate chain certificate (i.e., MO Sub-CA 1 cert.) by adding its own signature to an identifier (ID) and a public key of the primary subordinate certification authority (i.e., MO Sub-CA 1). The MO primary subordinate certification authority (i.e., MO Sub-CA 1) may add its signature to an ID and a public key of the secondary subordinate certification authority (i.e., MO Sub-CA 2) to generate the secondary intermediate chain certificate (i.e., MO Sub-CA 2 cert).

When the EV is shipped, based on the contract concluded between the MO and the owner of the EV, the MO's secondary subordinate certification authority (i.e., MO Sub-CA 2) may generate a contract certificate by using a private key paired with the public key included in the MO's secondary intermediate chain certificate (i.e., MO Sub-CA 2 cert.), and install the contract certificate in the EV through, for example, a charging station operator that the EV initially visits. The contract certificate is linked to the EV owner's payment account through a unique identifier called an e-Mobility authentication identifier (eMAID).

The OEM provisioning certificate (i.e., OEM Prov cert.) and the contract certificate may be respectively generated based on the root certificates (e.g., OEM Root CA cert. and MO Root CA cert.) generated by the OEM and MO themselves, may be generated based on a V2G root certificate or a global root certificate (i.e., V2G Root cert.) of a V2G root server (hereinafter referred to as `global root server' for short) of a distribution network operator, and may be independent of certificates used by other actors.

Meanwhile, the global root server corresponding to a V2G root certification authority may use the V2G root certificate (i.e., V2G Root CA cert.) instead of the OEM and MO root certificates (i.e., OEM Root CA cert. and MO Root CA cert.) to issue the OEM provisioning certificate (i.e., OEM Prov cert.) and the contract certificate (see a dotted line arrow in FIG. 3).

In addition, the global root server may generate at least two series of certificates, that is, a certificate series for the CPO and the charging station, and a certificate series for the provisioning service.

Specifically, the global root server may add its own signature to an ID and a public key of the CPO's primary subordinate certification authority (i.e., CPO Sub-CA 1) to issue a primary intermediate chain certificate (i.e., CPO Sub-CA 1 cert.). The CPO's primary subordinate certification authority (i.e., CPO Sub-CA 1) may add its own signature to an ID and a public key of the CPO's secondary subordinate certification authority (i.e., CPO Sub-CA 2) to issue a secondary intermediate chain certificate (i.e., CPO Sub-CA 2. cert.).

The CPO's secondary subordinate certification authority (i.e., CPO Sub-CA 2) may use a private key paired with the public key included in the CPO's secondary intermediate chain certificate (i.e., CPO Sub-CA 2 cert.) to issue an SECC leaf certificate or an EVSE leaf certificate. That is, the CPO's secondary subordinate certification authority (i.e., CPO Sub-CA 2) may add its own digital signature to an ID and a public key of the EVSE received from the EVSE to issue the EVSE leaf certificate or SECC leaf certificate.

The EVSE leaf certificate may be used by the EV during TLS communication setup to verify whether the EV is communicating with a legitimate charging station and not a rogue charging station. This certificate may be issued not only to the charging station (CS), but also to a backend server of the CSO.

The global root server may add its own signature to an ID and a public key of a provisioning primary subordinate certification authority (i.e., Prov Sub-CA 1) within the CPO to issue a primary intermediate chain certificate (i.e., Prov Sub-CA 1 cert.). The provisioning primary subordinate certification authority (i.e., Prov Sub-CA 1) may add its own signature to an ID and a public key of a provisioning secondary subordinate certification authority (i.e., Prov Sub-CA 2) to issue a secondary intermediate chain certificate (i.e., Prov Sub-CA 2 cert.).

The provisioning secondary intermediate certification authority (i.e., CPO Sub-CA 2) may use a private key paired with the public key included in the provisioning secondary intermediate chain certificate (i.e., Prov Sub-CA 2 cert.) to issue a leaf provisioning certificate, and transmit it to a certificate provisioning service (CPS) so that it is installed.

Meanwhile, each root certification authority (i.e., V2G Root CA, MO Root CA, OEM Root CA) may issue and provide an OCSP certificate. In this case, clients may access an OCSP server according to an online certificate status protocol (OCSP), request revocation/non-revocation status information on validity of certificates, and receive an inquiry result.

In FIG. 3, for simplicity, the OCSP certificate is shown as being available only for the CPO subordinate certification authorities (i.e., CPO Sub-CA 1 and CPO Sub-CA 2), but all the root certification authorities (i.e., V2G Root CA, MO Root CA , OEM Root CA) can issue and use OCSP certificates so that the validity of certificates in its own root certificate series can be inquired. In addition, a private environment (PE) private root of a PE may install a PE TLS certificate in a PE wall box.

Meanwhile, in the present exemplary embodiment, the SECC may provide the EVCC with information on MOs or eMSPs that support PnC services of the charging station in form of a list, whereby the EV knows in advance an MO that the charger can authorize, and delivers a contract certificate supported by the corresponding MO to the charger. Accordingly, the trial-and-error problems can be prevented in PnC authorization so that the authorization of the PnC procedure is performed quickly and accurately.

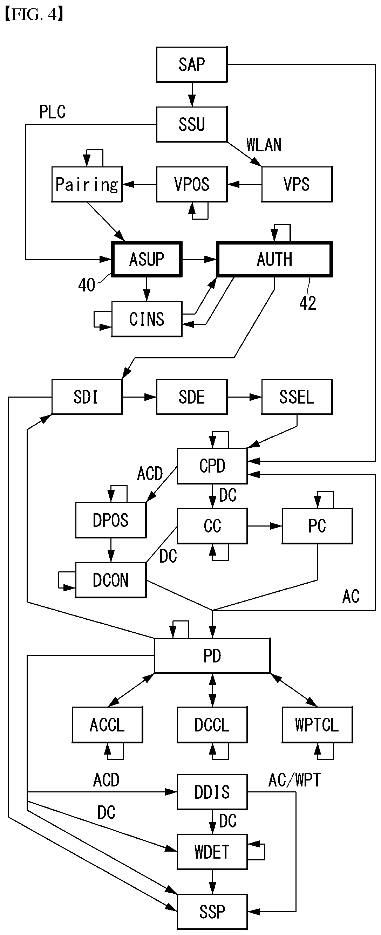

FIG. 4 is a block diagram illustrating a message sequencing for V2G communication states to describe a PnC-related service provider information provision method according to an exemplary embodiment of the present disclosure.

As shown in FIG. 4, the EVCC may receive, from the SECC, a supported application protocol response message (SupportedAppProcotolRes) corresponding to a supported application protocol request message (SupportedAppProcotolReq) in a supported application protocol (SAP) configuration state, and the EVCC may transmit a session setup request message (SessionSetupReq) to the SECC within a preset sequence performance timeout time in a session setup (SSU) state.

When the EVCC uses power line communication (PLC), the EVCC may receive a session setup response message (SessionSetupRes) corresponding to the session setup request message (SessionSetupReq), and then move or transition to a authorization setup (ASUP) state 40. Thereafter, the EVCC may transmit an authorization setup request message (AuthorizationSetupReq) to the SECC within a preset timeout period.

In addition, when the EVCC receives an authorization setup response message (AuthorizationSetupRes) with a response code parameter (ResponseCode) set to 'OK' and a certificate installation service parameter (CertificateInstallationService) set to 'True', the EVCC may, for installation or update of the contract certificate, transmit a certificate installation request message (CertificateInstallationReq) to the SECC within a predetermined timeout period in a certificate installation (CINS) state.

When the EVCC receives an authorization setup response message (AuthorizationSetupRes) with a response code parameter value set to `OK' and a certificate installation service parameter set to 'False', the EVCC may transmit an authorization request message (AuthorizationReq) to the SECC within a preset timeout period in an authorization (AUTH) state 42. In this case, a state transition may be possible from the AUTH state 42 to the CINS state.

In the above-described ASUP state 40 or AUTH state 42, the SECC may provide a service provider list for at least one or more service providers that support PnC services of a charging station associated with the EV to the EVCC. In addition, the EVCC may provide the SECC with information on one service provider selected from the service provider list and a contract certificate issued by the selected service provider.

Meanwhile, when the EVCC uses a wireless LAN, after receiving the session setup response message, the EVCC may move or transition to a vehicle positioning setup (VPS) state 30, and transmit a vehicle positioning setup request message (VehiclePositioningSetupReq) to the SECC.

In addition, after receiving a vehicle positioning setup response message (VehiclePositioningSetupRes), the EVCC may perform a second sequence for renegotiation according to parameters in the vehicle positioning setup (VPS) response message.

In the second sequence, a compatible method for positioning or pairing for ACD or WPT may be found based on the information included in the VPS response message, and if a compatible method does not exist or is not found, the EVCC may jump from the VPS state to the ASUP state 40 to proceed with DC charging or AC charging, and transmit an authorization setup request message (AuthorizationSetupReq) to the SECC within a preset timeout period in the ASUP state 40.

Of course, after receiving the VPS response message, according to another setting of the parameters in the VPS response message, the EVCC may move or transition to the ASUP sate through sequentially transitioning from the VPS state to the vehicle positioning state and the pairing state.

In addition, the EVCC may transition from the AUTH state 42 to a service discovery (SDI) state after authorization is completed, and may transition from the AUTH state 42 to a service detail (SDE) state. Here, the SDI state may transition to a session stop (SSP) state or may be transitioned from a power delivery (PD) state through service renegotiation.

That is, after receiving an authorization response message (AuthorizationRes) with a specific parameter (e.g., EVSEProcessing) set to 'Finished' and a response code parameter set to 'OK', the EVCC may transmit a service discovery request message (ServiceDiscoveryReq) to the SECC within a preset timeout period. The message transmitted to the SECC may be delivered to a target secondary actor by the SECC or via the SECC.

After receiving a service discovery response message (ServiceDiscoveryRes) with a response code parameter set to 'OK', the EVCC may transmit a service detail request message (ServiceDetailReq) to the SECC within a preset timeout period.

After receiving a service detail response message (ServiceDetailRes) with a response code parameter set to 'OK', if an additional service detail request message is needed to retrieve detailed information from the SECC, the EVCC may transmit another service detail request message to the SECC within a preset timeout period.

In addition, after receiving a service detail response message (ServiceDetailRes) in the SDE state, the EVCC may perform a first sequence for renegotiation according to a specific parameter in the service detail response message.

In the first sequence, pre-stored or preset compatible parameters for DC charging or AC charging may be found based on the service detail response message, and if compatible parameters are not found, the EVCC may jump or transition from the SDE state to the VPS state for vehicle positioning or paring for ACD or WPT, and transmit a vehicle positioning setup request (VehiclePositioningSetupReq) message to the SECC in the vehicle positioning setup (VPS) state.

In the above-described ASUP state 40 or AUTH state 42, the SECC may provide a service provider list for at least one or more service providers that support PnC services of a charging station associated with the EV to the EVCC. In addition, the EVCC may provide the SECC with information on one service provider selected from the service provider list and a contract certificate issued by the selected service provider.

On the other hand, the EVCC may be configured to remember a selected authorization service (SAS) already used during the current service session or to remember a SAD and a contract certificate chain so as not to fall into a continuous loop.

In addition, the remaining communication states such as service selection (SSEL), charging parameter discovery (CPD), device positioning (DPOS), device connection (DCON), cable check (CC), pre-charge (PC), power delivery (PD), AC charging loop (ACCL), DC charging loop (DCCL), wireless power transfer charging loop (WPTCL), device disconnection (DDIS), welding detection (WDET), session stop (SSP), and the like may be processed or transitioned based on power line communication (PLC), wireless LAN, and/or the like. In addition, at least some communication states may be processed or transitioned according to a process for AC charging scheme or DC charging scheme. In addition, at least some communication states may be processed or transitioned according to a scheme using WPT or ACD. Since the processing or transition of these communication states is already well known, a detailed description thereof will be omitted.

Meanwhile, in the aforementioned PnC authorization setup procedure, a specific parameter of the authorization setup request message, that is, a parameter requesting a certificate installation service, may be set to 'yes' or 'true'.

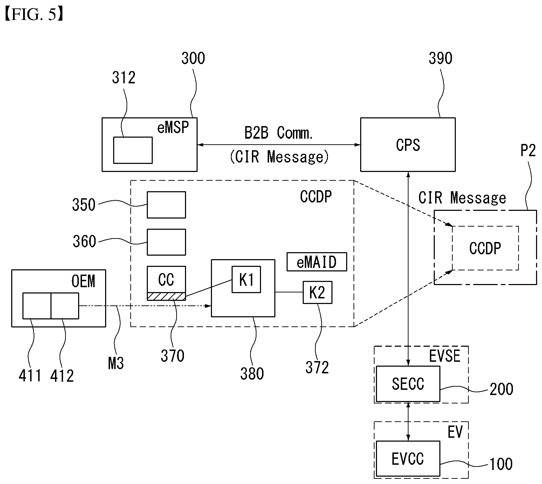

FIG. 5 is an exemplary diagram for describing a certificate installation method that can be combined with a PnC-related service provider information provision method according to an exemplary embodiment of the present disclosure.

As shown in FIG. 5, the certificate installation method may include a process of encrypting a contract certificate private key in a secondary actor (SA) such as the eMSP 300 to install a contract certificate (CC) in an EVCC that does not include a trusted platform module (TPM) 2.0.

That is, in order to minimize a distribution route and a communication processing time and to simplify structural processing, the SA may generate a key pair for a certificate, generate its own certificate using the key pair, and distribute the generated contract certificate and corresponding private key to the EVCC 100. To maintain the confidentiality of the contract private key, a secure mechanism may be used for secure transmission of the contract certificate private key.

The contract certificate (CC) may include a certificate (i.e., Sub-CA 1 cert.) 350 issued for the EVCC 100 by the eMSP 300's primary subordinate certification authority and/or a certificate (i.e., Sub-CA 2 cert.) 360 issued for the EVCC 1000 by the eMSP 300's secondary subordinate certification authority. The contract certificate may be used for an XML signature on an application layer to verify a signature generated by the EVCC 100.

The public key belonging to the contract certificate (hereinafter referred to simply as `contract public key') 370 may be used to encrypt the contract private key for security when the secondary actor such as the eMSP 300 distributes the contract certificate and the contract private key. That is, the encryption of the contract certificate may use the private key paired with the public key (contract public key) 370 included in the root certificate 312 of the second actor or the eMSP 300 or included in primary intermediate CA certificate 350 or the secondary intermediate CA certificate 360 of the eMSP.

In addition, the encryption of the contract certificate private key, that is, the contract private key (K1), may use the contract public key 370 of the contract certificate, an encryption parameter M3 of the OEM provision public key 412 included in the OEM provisioning certificate 411, and an ephemeral Diffie Hellman public key K2 372. A data packet (CCDP) of the encrypted contract private key K1 may include the eMAID corresponding to the EV user.

In other words, the contract private key 380 may be encrypted based on an Elliptic-curve Diffie-Hellman (ECDH) shared secrete key input from the public key 412 of the OEM provisioning certificate 411 in an advanced encryption standard (AES) of a Galois/counter mode (GCM) with an authentication tag. The ECDH shared secret key may correspond to the encryption parameter M3.

That is, the contract private key K1 to which the authentication tag is combined may be encrypted with AES in GCM mode based on the ECDH shared secret key input from the public key 412 of the OEM provisioning certificate. The ECDH shared secret key may include the ephemeral DH public key K2 and an ephemeral DH secret key. The ephemeral DH secrete key or ephemeral DH private key corresponding to the ephemeral DH public key K2 may be prepared separately.

The eMSP 300 may use the root certificate 312 to generate the contract certificate. The root certificate 312 is the eMSP's root CA certificate, and this root certificate does not to exist in the EVCC, but the CPS may need to process the contract certificate according to a preconfigured procedure.

In addition, the eMSP 300 may generate the contract certificate and generate a credential for the EVCC 100 including an encrypted contract certificate private key, that is, a key specifically encrypted for the EVCC 100. This credential may be stored in a specific message field (SignedInstallationData).

In addition, in order to distribute the contract certificate and the encrypted private key to the EVCC 100 through an online installation path via the SECC 200, the eMSP 300 may deliver the contract certificate data packet (CCDP) or a certificate installation package including the CCDP to the CPS 390 as a certificate installation response (CIR) message through a preconfigured communication channel of general B2B communication.

The CPS 390 may use its signature to give accuracy and reliability of the credential, and relay the signed message to the SECC 200. Here, the SECC 200 may compile the certificate installation response (CIR) message and transmit it to the EVCC 100. In this case, the CPS is considered reliable, and thus the EVCC 100 may not need to verify the contract certificate received through the CIR message. For example, the eMSP itself, EVSE operator, or a completely independent service provider may be responsible for the role of the CPS 390.

The aforementioned credential may include information such as a symmetric key previously shared by the eMSP 300 and the EVCC 100 or an ID that may be used to verify a physical or logical identity of the EVCC 100. In addition, the aforementioned credential may include a public key paired with the private key of the EVCC 100, or a public key certificate or certificate chain for the public key. The certificate chain may include a provisioning certificate chain. The provisioning certificate is a certificate used for one-time authentication through the EVCC 100, and a CPS leaf certificate is issued and installed after authentication is completed, so that it can be used for later authentication.

Meanwhile, when the eMSP 300 or SA provides multiple contract certificates based on different curves as defined by standards or regulations, the eMSP 300 or SA need to transmit multiple different signed installation data (SignedInstallationData) containers to the SECC 200, and the EVCC 100 may import and install all different contract certificates by utilizing a looping mechanism for certificate installation request (certificateInstallationReq) messages at the discretion of the EV user.

On the other hand, the EVCC 100 may sign a body element of the certificate installation request message using the private key associated with the EV public key ('subjectPublicKey') of the OEM provisioning certificate 411.

In summary, in the above-described certificate installation method, an ephemeral static DH key exchange protocol is used to derive a static session key from a recipient's key. The SA or eMSP may transmit the private key in an encrypted form to the EVCC 100 using the derived session key. In an ephemeral-static variation of the DH protocol, the public key of the recipient, e.g., EVCC 100, is not changed. That is, it is static and already known to the sender, i.e., the eMSP 300. However, the sender 300 may still use the ephemeral public key transmitted to the recipient. In the above-described manner, both the sender and the recipient may derive the same session key without the recipient's response message. Since the SA uses the ephemeral key, the derived session key is different for each instance (distribution) of the secret or private key.

In addition, the CPS 390 may use the signature to assert the correctness and authenticity of the credential, and relay a signed message fragment P2 to the SECC 200. The SECC 200 may compile the certificate installation response (CertificateInstallationRes) message received from the CPS 390, and transmit it to the EVCC 100. In this case, the CPS is considered trustworthy, and thus the EVCC 100 does not need to verify the contract certificate received through the certificate installation response message.

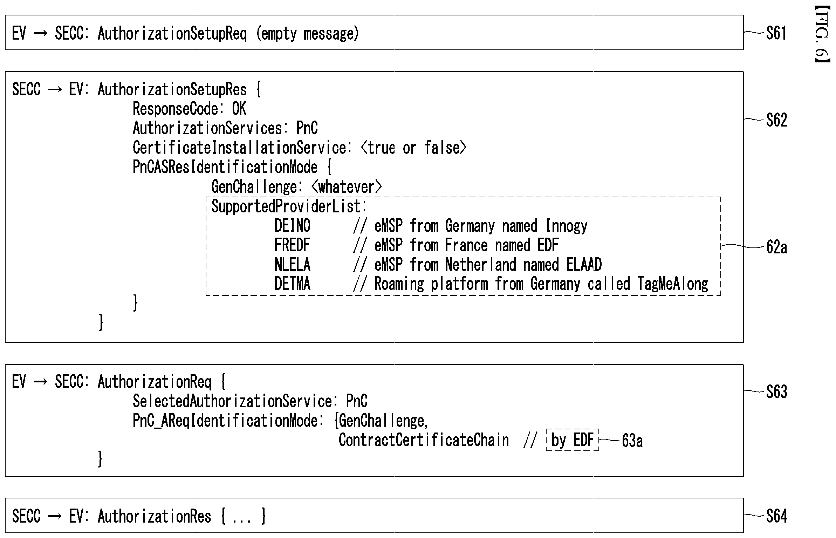

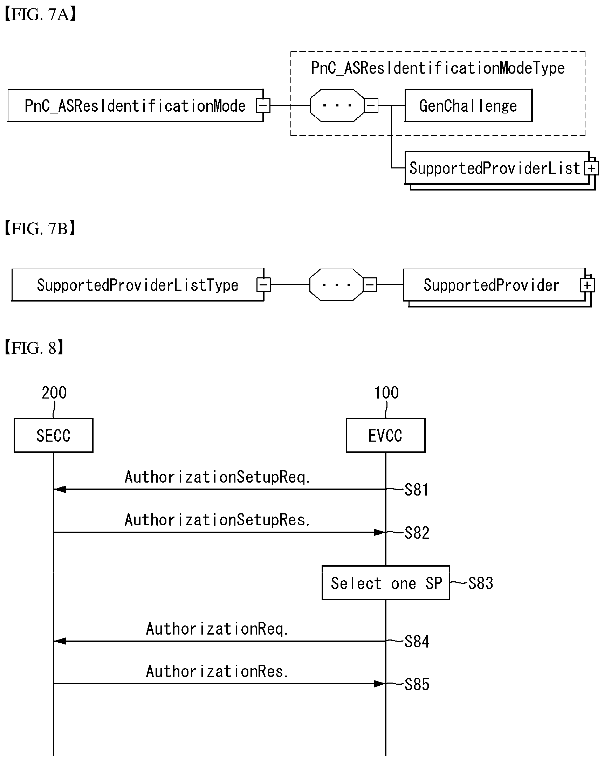

FIG. 6 is a diagram for describing main procedures of a PnC-related service provider information provision method according to an exemplary embodiment of the present disclosure. FIGS. 7A and 7B are schema diagrams of some configurations of an authorization setup response message that can be employed in the PnC-related service provider information provision method of FIG. 6.

As shown in FIG. 6, the PnC-related service provider information provision method may be performed in authorization setup procedures S61 and S62 and authorization procedures S63 and S64.

In the PnC-related service provider information provision method, the EVCC of the EV may first transmit an authorization setup request message (AuthorizationSetupReq) for PnC to the SECC. The authorization setup request message may be a substantially empty message (S61).

Then, the SECC may transmit an authorization setup response message (AuthorizationSetpuRes) to the EVCC of the EV (S62). In particular, the SECC may provide the EVCC with a list of supported eMSPs, MOs, or clearing house providers for PnC authorization. That is, the SECC may include a list of service providers (SupportedProviderList) supporting PnC in an element of a specific parameter of the authorization setup response message.

For example, the authorization setup response message may include parameters related to a response code, authorization services, certificate installation service, and PnC ASUP response identification mode.

In the authorization setup response message, the response code may be set to 'OK', the authorization service may be set to `PnC', and the certificate installation service may be set to 'yes/'true' or 'no'/'false'.

In addition, in the authorization setup response message, a PnC authorization setup response identification mode (PnC_ASResIdentificationMode) parameter may include a generation challenge (GenChallenge) element as its type, and may include an element of a supported service provider list (SupportedProviderList) (see FIG. 7A). The generation challenge is an element related to allowing charging attempts and may be set to allow charging attempts by anyone or anything. In addition, a supported service provider list type (SupportedProviderListType) parameter of the supported service provider list parameter may include elements for supported service providers (SupportedProvider) as many as the preset number (e.g., 30) (see FIG. 7B). If the preset number is exceeded, the last element of the supported service provider list type may be set to indicate that there is an additional service provider list, such as 'MORE'.

For example, the supported service provider list 62a is a list of service providers that support PnC of the SE associated with the EV, and may include information or identifiers of MOs in a contractual relationship that supports PnC for battery charging of the EV. For example, the identifiers of MOs are 'DEINO', 'FREDF', `NLELA', and the like.

That is, the supported provider list in which information on supported service providers is stored may include, for example, a first eMSP (`DEINO'), a second eMSP (`FREDF'), and a third eMSP (`NLERA'). The first eMSP is an eMSP from Germany (DE) indicated by a provider code called 'Innogy', the second eMSP is an eMSP from France (FR) indicated by a provider code called `EDF', and the third eMSP may be an eMSP from Netherlands (NL) indicated by a provider code called `ELA'.

As described above, the supported provider list may be configured to insert an identifier of a charging service provider or a roaming service provider as the first 5 characters of the eMAID. The first 5 characters may include 2 characters of country code and 3 characters of company code. Of course, the identifier of the charging service provider or the roaming service provider included in the support service provider list may use a code scheme other than the aforementioned 5-character scheme.

In addition, the supported service provider list 62a may include a roaming platform ('DETMA') for MOs in a contractual relationship supporting PnC for battery charging of the EV. The roaming platform ('DETMA') may be a roaming platform of Germany (DE) with a provider code called `tagmealong (TMA)'.

When such a roaming platform is used, the EV or the EV user may use a contract certificate issued by a first MO to receive an automatic charging authorization and payment service from a third-party SE operated in a PnC scheme supported by a second MO different from the first MO.

Then, the EVCC of the EV may transmit an authorization request message (AuthorizationReq) to the SECC. In this case, the EVCC may generate an authorization request message (AuthorizationReq) including service provider information corresponding to a first service provider selected from the service provider list and a contract certificate issued by the first service provider, and transmit the authorization request message to the SECC (S63).

In the present exemplary embodiment, the authorization request message may include a selected authorization service parameter, and may include a PnC authorization request identification mode parameter or a PnC authorization request authorization mode parameter.

In the authorization request message, the selected authorization service (selected Authorization Service) parameter may be set to 'PnC'. In addition, the PnC authorization request authorization mode (PnC_AReqAuthorizationMode) parameter or the PnC authorization request identification mode (PnC_AReqIdentificationMode) parameter may include a generation challenge (GenChallenge) element and a contract certificate chain (ContractCertificateChain) element. The contract certificate chain element may be set to `by EDF' 63a to mean that it includes a contract certificate issued by a specific eMSP called 'EDF' in France (FR).

Then, the SECC may transmit the contract certificate issued by the first service provider to the CPS, receive a confirmation result from the CPS, and then transmit an authorization response message (AuthorizationRes0 to the EVCC of the EV (S64).

FIG. 8 is a diagram for describing main procedures of a PnC-related service provider information provision method according to another exemplary embodiment of the present disclosure.

As shown in FIG. 8, the EVCC 100 may transmit an authorization setup request message (AuthorizationSetupReq) for PnC to the SECC 200 of the SE that supplies electric power to the EV (S81).

Then, the EVCC 100 may receive an authorization setup response message (AuthorizationSetupReq) including a list of service providers supporting PnC of the SE associated with the EV from the SECC 200 (S82).

Then, the EVCC 100 may select one service provider (SP) from the service provider list (S83).

Then, the EVCC 100 may transmit an authorization request message (AuthorizationReq) including a contract certificate issued by the selected service provider to the SECC 200 (S84).

Then, the EVCC 100 may receive an authorization response message (AuthorizationRes) indicating completion of the PnC authorization from the SECC 200 (S85).

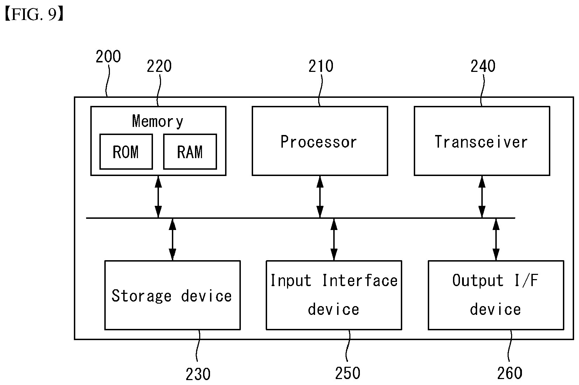

FIG. 9 is a schematic block diagram for a PnC-related service provider information provision apparatus according to another exemplary embodiment of the present disclosure.

As shown in FIG. 9, the PnC-related service provider information provision apparatus 200 may be mounted on or coupled to an EV or EVCC, and in another implementation, may be mounted on or coupled to an EVSE or SECC.

The PnC-related service provider information provision apparatus 200 may include at least one processor 210 and a memory 220. In addition, the apparatus 200 may further include a storage device 230 and a transceiver 240. In addition, the apparatus 200 may include an input interface device 250, an output interface device 260, or an input/output interface device.

The processor 210 may execute program instructions stored in the memory 220 and/or storage device 230. The processor 210 may be implemented as at least one central processing unit (CPU) or graphics processing unit (GPU), or implemented as other processors capable of performing the PnC-related service provider information provision method according to the present disclosure.

The memory 220 may store program instructions or software modules. The processor 210 may implement the PnC related service provider information provision method by executing the program instructions or software modules stored in the memory 220.

In addition, at least some of the components of the PnC-related service provider information provision apparatus, including the processor 210 and the memory 220, may be connected to each other through a bus to exchange signals and data. The processor 210, memory 220, and program instructions executed by the processor 210 may implement the PnC related service provider information provision method in the EVCC or SECC.

The memory 220 may include, for example, a volatile memory such as read only memory (ROM) and a non-volatile memory such as random access memory (RAM). The memory 220 may load the program instructions stored in the storage device 230 and provide the loaded program instructions to the processor 210 so that the processor 210 can execute the program instructions.

The storage device 230 is a recording medium suitable for storing the program instructions and data, such as a magnetic medium such as a hard disk, floppy disk, and magnetic tape, an optical medium such as a compact disk read only memory (CD-ROM), digital versatile disk (DVD), a magneto-optical medium such as a floptical disk, or a semiconductor memory such as a flash memory, erasable programmable ROM (EPROM), or solid state drive (SSD) made based thereon.

The program instructions may be configured to, when executed by the processor 210, to perform: receiving an authorization setup request message for PnC from an EV communication controller (EVCC) installed in the EV; generating a service provider list of service providers supporting PnC for the SE associated with the EV according to the authorization setup request message; generating an authorization setup response message including the service provider list; transmitting the authorization setup response message to the EVCC; receiving, from the EVCC, an authorization request message including service provider information and a contract certificate corresponding to a first service provider selected from the service provider list; authorizing a PnC supported by the first service provider based on the service provider information and the contract certificate in the authorization request message; and transmitting an authorization response message indicating completion of authorization.

When the above-described program instructions are executed by the processor 210, they may be loaded into the processor 210 in the form of software modules or software units. The software module may include a transmission part that transmits messages, a reception part that receives messages, a generation part that generates a message that includes service provider information, a comparison part that compares mobility operators in the service provider information with information of previously stored mobility operators, and a selection part that selects a contract certificate issued by one mobility operator selected based on result of the comparison.

In addition, in the PnC-related service provider information provision apparatus, the transceiver 240 may include a WLAN interface, a PLC module, a point-to-point signaling (P2PS) controller, a gateway (G/W), or a communication subsystem of a combination thereof, and may function to transmit/receive or communicate signals and data with at least one external device. The WLAN interface may include an interface for Wi-Fi communication.

Meanwhile, the methods which have been described in the above-described exemplary embodiments may be implemented as computer-readable programs or codes on a computer-readable recording medium. The computer-readable recording medium may include all types of storage devices in which data that can be read by a computer system is stored. In addition, the computer-readable recording medium may be distributed to computer systems connected through a network to store and execute the computer-readable programs or codes in a distributed manner.

The computer-readable recording medium may include hardware devices specially configured to store and execute program instructions, such as ROM, RAM, and flash memory. The program instructions may include high-level language codes that can be executed by a computer using an interpreter or the like as well as machine codes generated by a compiler.

Some aspects of the present disclosure have been described above in the context of a device but may be described using a method corresponding thereto. Here, blocks or the device corresponds to operations of the method or characteristics of the operations of the method. Similarly, aspects of the present disclosure described above in the context of a method may be described using blocks or items corresponding thereto or characteristics of a device corresponding thereto. Some or all of the operations of the method may be performed, for example, by (or using) a hardware device such as a microprocessor, a programmable computer or an electronic circuit. In some embodiments, at least one of most important operations of the method may be performed by such a device.

In exemplary embodiments, a programmable logic device (e.g., a field-programmable gate array) may be used to perform some or all of functions of the methods described herein. In embodiments, the field-programmable gate array may be operated with a microprocessor to perform one of the methods described herein. In general, the methods are preferably performed by a certain hardware device.

While the present disclosure has been described above with respect to embodiments thereof, it would be understood by those of ordinary skill in the art that various changes and modifications may be made without departing from the technical conception and scope of the present disclosure defined in the following claims.

## Claims

1. A method for providing plug and charge/park and charge (PnC)-related service provider information, which is performed by a supply equipment communication controller (SECC) of a supply equipment (SE) supplying electric power to an electric vehicle (EV), the method comprising:
receiving an authorization setup request message for PnC from an EV communication controller (EVCC) installed in the EV;
generating a service provider list of service providers supporting PnC for the SE associated with the EV according to the authorization setup request message;
transmitting an authorization setup response message including the service provider list to the EVCC;
receiving, from the EVCC, an authorization request message including service provider information and a contract certificate corresponding to a first service provider selected from the service provider list; and
transmitting an authorization response message indicating completion of authorization of a PnC supported by the first service provider to the EVCC based on the service provider information and the contract certificate.

2. The method according to claim 1, wherein the authorization setup response message includes a PnC authorization setup response identification mode (PnCASResIdentificationMode) parameter with elements of a supported service provider list and a generation challenge (GenChallenge).

3. The method according to claim 2, wherein the supported service provider list is a list of service providers that support PnC of the SE associated with the EV, and includes information or identifiers of mobility operators in a contractual relationship supporting PnC for battery charging of the EV.

4. The method according to claim 2, wherein the supported service provider list (SupportedProviderList) is a list of service providers that support PnC of the SE associated with the EV, and includes a roaming platform for mobility operators in a contractual relationship supporting PnC for battery charging of the EV.

5. The method according to claim 2, wherein the authorization setup response message further includes a response code parameter set to `OK' and an authorization service parameter set to 'PnC'.

6. The method according to claim 5, wherein the authorization setup response message further includes a certificate installation service parameter set to 'true' or 'false'.

7. The method according to claim 1, further comprising:
allowing the EVCC to select one mobility operator (MO) from the service provider list based on the service provider list included in the authorization setup response message.

8. The method according to claim 7, further comprising:
allowing the EVCC to generate an authorization request message including service provider information for a first MO selected from the service provider list and a contract certificate issued by the first MO.

9. The method according to claim 1, further comprising:
based on the service provider list included in the authorization setup response message,
allowing the EVCC to release a state associated with the SE; or
allowing the EVCC to output a signal for the EV to leave a parking area of the SE.

10. The method according to claim 1, further comprising:
allowing the EVCC to select a roaming platform or roaming service included in the service provider list based on the service provider list; and
allowing the EVCC to generate an authorization request message including service provider information set to the roaming platform or the roaming service and a contract certificate issued by the roaming platform or a roaming platform providing the roaming service.

11. The method according to claim 10, wherein the authorization request message includes a selected authorization service parameter set to `PnC', and includes a generation challenge element and a contract certificate chain element within a PnC request identification mode or PnC request authorization mode parameter, and the contract certificate chain element is set to the roaming platform.

12. A method for providing plug and charge/park and charge (PnC)-related service provider information, which is performed by an electric vehicle communication controller (EVCC) of an electric vehicle (EV), the method comprising:
transmitting an authorization setup request message for PnC to a supply equipment communication controller (SECC) of a supply equipment (SE) that supplies electric power to the EV;
receiving, from the SECC, an authorization setup response message including a service provider list of service providers supporting PnC for the SE associated with the EV;
transmitting, to the SECC, an authorization request message including service provider information and a contract certificate corresponding to a first service provider selected from the service provider list; and
receiving, from the SECC, an authorization response message indicating completion of authorization of a PnC supported by the first service provider.

13. The method according to claim 12, wherein the authorization setup response message includes a PnC authorization setup response identification mode (PnCASResIdentificationMode) parameter with elements of a supported service provider list and a generation challenge (GenChallenge).

14. The method according to claim 13, wherein the supported service provider list is a list of service providers that support PnC of the SE associated with the EV, and includes information or identifiers of mobility operators in a contractual relationship supporting PnC for battery charging of the EV.

15. The method according to claim 13, wherein the supported service provider list (SupportedProviderList) is a list of service providers that support PnC of the SE associated with the EV, and includes a roaming platform by one of mobility operators in a contractual relationship supporting PnC for battery charging of the EV.

16. The method according to claim 13, wherein the authorization setup response message further includes a response code parameter set to `OK' and an authorization service parameter set to 'PnC'.

17. The method according to claim 16, wherein the authorization setup response message further includes a certificate installation service parameter set to 'true' or 'false'.

18. The method according to claim 12, further comprising: selecting one mobility operator (MO) from the service provider list based on the service provider list included in the authorization setup response message.

19. The method according to claim 18, further comprising:
generating an authorization request message including service provider information for a first mobility operator (MO) selected from the service provider list and a contract certificate issued by the first MO.

20. The method according to claim 12, further comprising:
based on the service provider list included in the authorization setup response message,
releasing a state associated with the SE; or
outputting a signal for the EV to leave a parking area of the SE.

21. The method according to claim 12, further comprising:
selecting a roaming platform or roaming service included in the service provider list based on the service provider list; and
generating an authorization request message including service provider information set to the roaming platform or the roaming service and a contract certificate issued by the roaming platform or a roaming platform providing the roaming service.

22. An apparatus for providing plug and charge/park and charge (PnC)-related service provider information, which includes a supply equipment communication controller (SECC) of a supply equipment (SE) supplying electric power to an electric vehicle (EV), the apparatus comprising:
a processor; and
a memory storing instructions executable by the processor,
wherein when executed by the processor, the instructions cause the process processor to perform:
receiving an authorization setup request message for PnC from an EV communication controller (EVCC) installed in the EV;
generating a service provider list of service providers supporting PnC for the SE associated with the EV according to the authorization setup request message;
transmitting an authorization setup response message including the service provider list to the EVCC;
receiving, from the EVCC, an authorization request message including service provider information and a contract certificate corresponding to a first service provider selected from the service provider list; and
transmitting an authorization response message indicating completion of authorization of a PnC supported by the first service provider to the EVCC based on the service provider information and the contract certificate.
